Europäisches Patentamt

(19) European Patent Office

Office européen des brevets

(11) Numéro de publication : **0 124 448**
**B1**

(12) **FASCICULE DE BREVET EUROPÉEN**

(45) Date de publication du fascicule du brevet :
**07.06.89**

(21) Numéro de dépôt : **84420019.6**

(22) Date de dépôt : **03.02.84**

(51) Int. Cl.⁴ : **G 01 J 3/06**

(54) Commande de la rotation du système dispersif d'un monochromateur.

(30) Priorité : 04.02.83 FR 8302269

(43) Date de publication de la demande :
07.11.84 Bulletin 84/45

(45) Mention de la délivrance du brevet :
07.06.89 Bulletin 89/23

(84) Etats contractants désignés :
AT BE CH DE GB IT LI LU NL SE

(56) Documents cités :
US—A— 3 011 391
US—A— 3 385 160
US—A— 3 447 873
US—A— 4 211 486
PATENTS ABSTRACTS OF JAPAN, vol. 3, no. 94 (E-129), 10 août 1979, page 29 E 129 & JP - A - 54 71 685

(73) Titulaire : THEYSSEL S.A.
Z.I. Susville
F-38350 La Mure (FR)

(72) Inventeur : Savoyet, Jean-Louis
La Mayrie
F-38770 La Motte d'Aveillans (FR)

(74) Mandataire : Casalonga, Axel et al
BUREAU D.A. CASALONGA - JOSSE Morassistrasse 8
D-8000 Munich 5 (DE)

## Description

L'invention a pour objet un dispositif de commande en rotation du système dispersif d'un monochromateur. Ce dispositif est plus simple et moins coûteux à construire que les systèmes habituels. L'invention concerne également une utilisation du monochromateur ainsi équipé et un appareil spécifique adapté à cette utilisation.

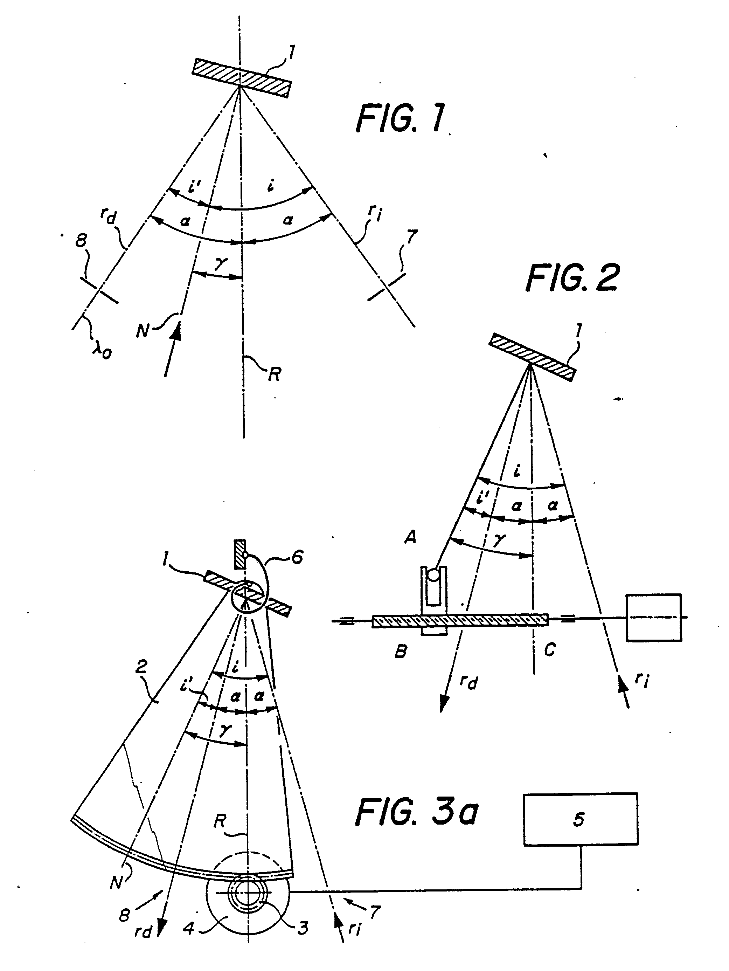

Les figures 1 et 2 du dessin annexé illustrent le fonctionnement de principe des monochromateurs usuels.

La figure 1 est un schéma de principe où on voit le système dispersif 1, qui reçoit de la fente d'entrée 7 un faisceau de lumière parallèle polychromatique (rayon incident $r_i$). Le système dispersif 1, par exemple un réseau, transforme ce faisceau en une série de faisceaux monochromatiques (rayons dispersés $r_d$), envoyés à tour de rôle par rotation du réseau sur la fente de sortie 8. Les angles i et i' représentent les angles d'incidence d'entrée et de sortie, respectivement, par rapport à la normale N au réseau tandis que ces mêmes angles sont repérés par $\alpha$ et $\alpha'$, par rapport à une référence R.

La figure 2 montre, en schéma, un organe mécanique A, B, C, d'un type connu, qui permet le défilement linéaire du spectre sur la fente de sortie 8. Cet organe mécanique, le plus connu, est du type « barre sinus ». L'angle $\gamma$ est l'angle formé entre la référence R et la normale N au réseau.

Le document JP-A-5 471 685 décrit un tel monochromateur doté d'un moyen de traitement rendant son réglage automatique.

Le document US-A 3 447 873 décrit un autre monochromateur doté d'un mécanisme relativement complexe, avec cames, leviers et pignons angulaires, destiné à linéariser la longueur d'onde avec la commande et à introduire des filtres d'interférence.

Le but de l'invention est d'éliminer les inconvénients précédents en réalisant un monochromateur à la fois automatique, linéaire et doté de filtres séparateurs, mais surtout d'une réalisation mécanique beaucoup plus simple.

L'objet de l'invention est donc un dispositif de commande de la rotation du système dispersif d'un monochromateur comprenant un système dispersif tel qu'un réseau entraîné directement par un secteur denté.

La particularité essentielle du dispositif selon l'invention est qu'il comprend des moyens auxiliaires séparateurs d'ordre constitués par au moins un filtre optique, positionné angulairement par rapport à la normale du système dispersif et transversalement par rapport à l'axe du système dispersif, et rendu solidaire du système dispersif par l'intermédiaire du secteur denté sur lequel il est fixé.

Le dispositif selon l'invention peut comporter en outre des moyens de réglage automatiques, constitués par exemple par un filtre optique à raies caractéristiques d'absorption connues, tel qu'un filtre en polystyrène.

L'invention sera mieux comprise en référence aux figures 3A à 5 du dessin annexé, données à titre d'exemple.

La figure 3A est un schéma de principe d'un monochromateur équipé du dispositif de commande selon l'invention.

La figure 3B est un organigramme illustrant le fonctionnement du dispositif de commande.

La figure 4 représente schématiquement les moyens séparateurs d'onde et le recalage automatique du monochromateur.

La figure 5 est un graphique du flux reçu par le détecteur en fonction de la longueur d'onde, en vue du recalage automatique.

Comme illustré sur ces figures, le dispositif intervient de la façon suivante : partant d'une position angulaire $\gamma_0$ du système dispersif 1 qui détermine sur la fente de sortie 8 du monochromateur une longueur d'onde $\lambda_0$ ou un nombre d'ondes $\delta_0$, voulant obtenir un déplacement $\Delta\lambda$ ou $\Delta\delta$ pour aboutir à la longueur d'ondes $\lambda_1$ ou au nombre d'ondes $\delta_1$, le circuit logique 5 calcule le déplacement angulaire $\Delta\gamma$ nécessaire.

Dans ce premier calcul, le circuit logique 5 prend en compte la formule mathématique caractérisant le système dispersif choisi. Tenant compte du rapport de réduction global, le circuit logique 5 calcule alors le nombre n de tours ou de fractions de tour dont doit tourner l'axe du moteur 4. Puis il commande et contrôle la rotation de l'axe du moteur 4 de n tours.

Par l'intermédiaire du pignon 3 engrenant directement sur le secteur denté 2, le système dispersif 1 est déplacé en rotation.

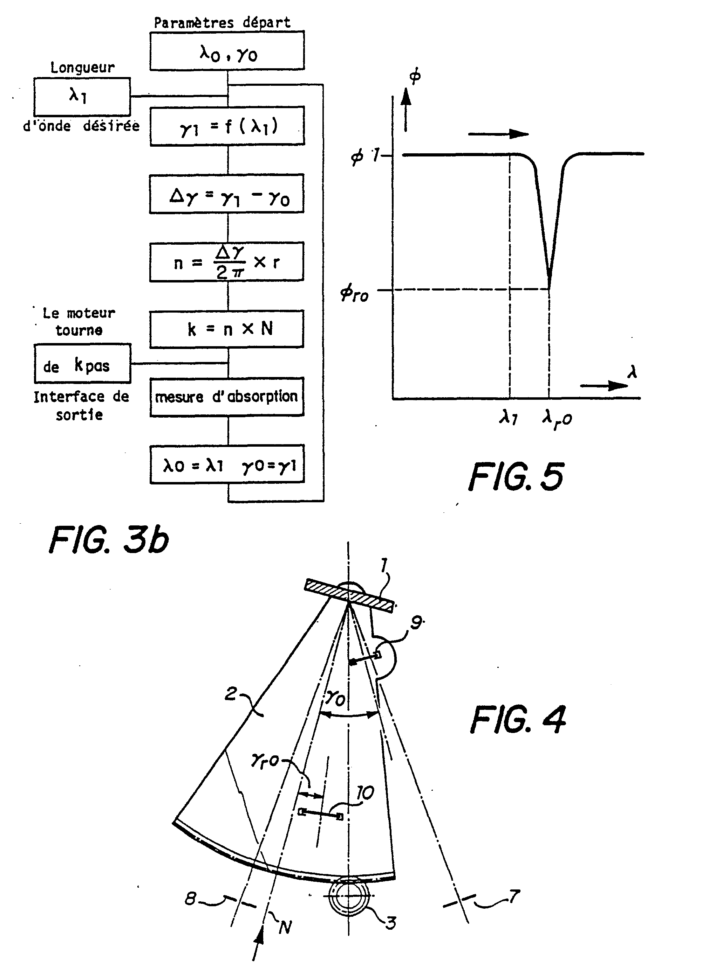

Les moyens de rattrapage de jeu, à ressort sur la figure 3A, sont accrochés d'une part sur l'ensemble secteur denté 2/système dispersif 1 et d'autre part sur le boîtier du monochromateur, permettent d'éliminer les jeux de fonctionnement. Le ressort, ici à spirale 6, doit subir une contrainte quelque soit l'angle $\gamma$ de façon à assurer le contact permanent dent sur dent.

Afin d'obtenir des résultats reproductibles, il est préférable de balayer le spectre en conservant toujours le même sens de rotation.

Lorsqu'un système dispersif est éclairé par un rayonnement couvrant un intervalle spectral plus étendu que l'intervalle spectral libre de l'appareil, il y a superposition en chaque point du spectre de plusieurs radiations de longueur d'onde différentes. Pour éviter cela, on utilise des moyens auxiliaires séparateurs d'ordre. La solution la plus simple pour éliminer la lumière parasite consiste à utiliser un filtre optique 9 dont on a judicieusement choisi la courbe de transmission.

Dans le cas présent, le filtre optique 9 monté dans un boîtier porte-filtre est positionné angulairement par rapport à la normale N au système dispersif et transversalement par rapport à l'axe du système dispersif.

Le porte-filtre est rendu solidaire du système dispersif par l'intermédiaire d'un bras de liaison qui dans le cas présent est constitué par le secteur denté 2 lui-même.

Plusieurs filtres 9 peuvent être positionnés ; chacun d'eux rencontrera successivement le faisceau incident $r_i$ éliminant ainsi l'énergie parasite de chacune des régions spectrales étudiées.

De façon similaire, on peut positionner par rapport au système dispersif 1 un filtre optique 10 constitué par un matériau dont on connaît les raies caractéristiques d'absorption. On peut utiliser par exemple une lame de polystyrène de quelques microns d'épaisseur. Elle permet de vérifier la reproductibilité de l'appareil. On choisit une longueur d'onde $\lambda r_0$, caractéristique du polystyrène et choisie de telle manière qu'elle ne corresponde pas à une raie d'absorption de l'échantillon. Le système dispersif vient se positionner angulairement de façon à ce qu'apparaisse sur la fente de sortie une raie de longueur d'onde $\lambda_1$ inférieure à $\lambda r_0$ mais très voisine. Le détecteur de rayonnement reçoit le flux $\varnothing_1$. Ensuite, le réseau tourne dans son sens normal de marche. A un moment donné, le flux lumineux $\varnothing$ passe par un minimum $\varnothing r_0$ qui correspond précisément à la longueur d'onde $\lambda r_0$ de référence. L'angle $\gamma r_0$ relatif à $\lambda r_0$ devient alors l'angle origine pour la série de mesures qui suivra cette vérification.

Tout ceci est illustré sur les figures 4 et 5.

Ces mesures étant effectuées comme décrit plus haut, cette vérification permet ainsi de réajuster automatiquement avant chaque mesure l'échelle des longueurs d'onde du monochromateur.

**Revendications**

1. Dispositif de commande de la rotation du système dispersif d'un monochromateur, comprenant un système dispersif tel qu'un réseau (1) entraîné directement par un secteur denté (2), caractérisé par le fait qu'il comprend des moyens auxiliaires séparateurs d'ordre constitués par au moins un filtre optique (9) positionné angulairement par rapport à la normale (N) du système dispersif et transversalement par rapport à l'axe du système dispersif, et rendu solidaire du système dispersif par l'intermédiaire du secteur denté (2) sur lequel il est fixé.

2. Dispositif selon la revendication 1, caractérisé par le fait qu'il comprend des moyens (5) permettant le réglage automatique du monochromateur.

3. Dispositif selon la revendication 2, caractérisé en ce que les moyens permettant le réglage automatique du monochromateur comprennent au moins un filtre optique (10) constitué d'un matériau dont on connaît les raies caractéristiques d'absorption.

4. Dispositif selon la revendication 3, caractérisé en ce que le matériau constituant le filtre optique (10) est du polystyrène.

**Claims**

1. Device for controlling the rotation of the dispersive system of a monochromator, comprising a dispersive system (1) such as a grating driven directly by a toothed sector (2), characterized in that it comprises auxiliary means for order separation, which means consist of at least one optical filter (9) positioned angularly in relation to the normal (N) of the dispersive system and transversely in relation to the access of the dispersive system, and made integral with the dispersive system via the toothed sector (2), on which it is fixed.

2. Device according to claim 1, characterized in that it comprises means (5) permitting the automatic regulation of the monochromator.

3. Device according to claim 2, characterized in that the means permitting the automatic regulation of the monochromator comprise at least one optical filter (10) consisting of a material, the characteristic absorption lines of which are known.

4. Device according to claim 3, characterized in that the material constituting the optical filter (10) is polystyrene.

**Patentansprüche**

1. Vorrichtung zur Steuerung der Verschwenkung des Dispersions-Systems eines Monochromators, mit einem Dispersions-System wie z. B. einem Gitter (1), das unmittelbar über ein Zahnsegment (2) angetrieben ist, dadurch gekennzeichnet, daß sie zusätzliche Mittel zur Bereichstrennung enthält, die wenigstens ein optisches Filter (9) umfassen, das im Winkel zur Normalen (N) des Dispersions-Systems und quer zur Achse des Dispersions-Systems angebracht ist, und daß das Filter über das Zahnsegment (2), auf dem es befestigt ist, fest mit dem Dispersions-System verbunden ist.

2. Vorrichtung nach Anspruch 1, dadurch gekennzeichnet, daß sie Mittel (5) zur selbsttätigen Einstellung des Monochromators umfaßt.

3. Vorrichtung nach Anspruch 2, dadurch gekennzeichnet, daß die Mittel zur selbsttätigen Einstellung des Monochromators wenigstens ein optisches Filter (10) umfassen, das aus einem Material besteht, dessen charakteristische Absorptionslinien bekannt sind.

4. Vorrichtung nach Anspruch 3, dadurch gekennzeichnet, daß das Material, das das optische Filter (10) bildet, aus Polystyren ist.

FIG. 1

FIG. 2

FIG. 3a

FIG. 3b

FIG. 5

FIG. 4